# EUROPÄISCHE PATENTSCHRIFT

(11) **EP 3 883 363 B1**
(45) Veröffentlichungstag und Bekanntmachung des Hinweises auf die Patenterteilung: **18.06.2025**
(21) Anmeldenummer: 19801309.6
(22) Anmeldetag: 07.11.2019
(51) Int. Cl.: A01G 9/14

(54) **GEWÄCHSHAUSANLAGE**
GREENHOUSE SYSTEM
ENSEMBLE SERRE

(30) Priorität: 19.11.2018 DE 102018128968
(43) Veröffentlichungstag der Anmeldung: 29.09.2021
(73) Patentinhaber: Jungheinrich Aktiengesellschaft, 22047 Hamburg (DE)
(72) Erfinder: BECKER, Michael, 63512 Hainburg (DE); HARTING, Elmar, 63075 Offenbach (DE); CAVELIUS, Jörg, 61118 Bad Vilbel (DE)
(74) Vertreter: Keil & Schaafhausen Patentanwälte PartGmbB
(86) Internationale Anmeldenummer: PCT/EP2019/080602
(87) Internationale Veröffentlichungsnummer: WO 2020/104211

(56) Entgegenhaltungen:
- JP-A- H09 205 831
- JP-A- H09 308 377

## Beschreibung

Die vorliegende Erfindung betrifft eine Gewächshausanlage nach dem Oberbegriff des Anspruchs 1.

Eine derartige Gewächshausanlage ist beispielsweise aus JP H09 308 377 A bekannt.

Eine derartige Gewächshausanlage kann für das so genannte "Vertical Farming" verwendet werden, bei dem eine zur Verfügung stehende Grundfläche dadurch optimal ausgenutzt wird, dass diese Grundfläche durch das Anordnen mehrerer Aufnahmepositionen für Pflanzbehälter sozusagen vervielfacht wird. Darüber hinaus kann man in den Gewächshausanordnungen jeweils eine für das Wachstum der Pflanzen günstige Atmosphäre erzeugen, d.h. eine günstige Temperatur und Feuchtigkeit. Sofern erforderlich, kann die für das Wachstum der Pflanzen erforderliche Beleuchtung durch Leuchtmittel bereitgestellt werden, die in den jeweiligen Kammern vorgesehen sind.

Die Verwendung von mehreren übereinander angeordneten Aufnahmepositionen hat zwar den Vorteil, dass man Pflanzfläche gewinnt. Sie hat aber den Nachteil, dass die Beschickung der Aufnahmepositionen mit Pflanzen, die vielfach in Pflanzbehältern angeordnet sind, mühsam wird.

Der Erfindung liegt die Aufgabe zugrunde, eine einfache und gleichzeitig kostengünstige Möglichkeit anzugeben, Pflanzen in vorgegebenen Bedingungen wachsen zu lassen.

Diese Aufgabe wird durch eine Gewächshausanlage mit den Merkmalen des Anspruchs 1.

Ein Regalbediengerät hat den Vorteil, dass es einen Pflanzbehälter in drei Raumrichtungen bewegen kann. Eine erste Bewegungsrichtung verläuft dabei horizontal, also parallel zu einem Fußboden, auf dem die Gewächshausanordnungen aufstehen, und parallel zur ersten Ebene. Die zweite Bewegungsrichtung ist vertikal. Auch die zweite Bewegungsrichtung verläuft parallel zu der ersten Ebene. Die dritte Bewegungsrichtung verläuft senkrecht zu der ersten Ebene. Man kann also das Regalbediengerät mit einem Pflanzbehälter beladen und es dann so ansteuern, dass es den Pflanzbehälter in der gewünschten Aufnahmeposition in einer der Gewächshausanordnungen absetzt. Da bei einer derartigen Gewächshausanlage nur eine begrenzte Anzahl an Beschickungsvorgängen pro Tag erforderlich ist, kann das Regalbediengerät jedenfalls im Hinblick auf eine Antriebsleistung relativ schwach dimensioniert werden. Damit ist das Regalbediengerät kostengünstig.

Die erste Kammer weist eine erste Entnahmeseite auf, die gegenüber der ersten Beschickungsseite angeordnet ist, und die zweite Kammer weist eine zweite Entnahmeseite auf, die gegenüber der zweiten Beschickungsseite angeordnet ist, wobei die erste Entnahmeseite und die zweite Entnahmeseite in einer gemeinsamen zweiten Ebene angeordnet sind und ein zweites Regalbediengerät vor der Entnahmeseite angeordnet ist. Hier gelten die gleichen Vorteile wie an der Beschickungsseite. Das zweite Regalbediengerät kann verwendet werden, um die Pflanzbehälter aus den Kammern der Gewächshausanordnungen zu entnehmen. Auch hierzu ist die Möglichkeit, die Pflanzbehälter in drei Raumrichtungen zu bewegen, von Vorteil. Der Hubwagen des Regalbediengeräts kann vor die jeweilige Aufnahmeposition gefahren werden. Das Regalbediengerät kann dann den jeweiligen Pflanzbehälter etwas anheben, senkrecht zur zweiten Ebene aus der Kammer herausbewegen, vor der zweiten Ebene absenken und dann von der Gewächshausanordnung wegfördern. Auch hierzu ist die Kraft eines Menschen, die zudem mit einer gewissen Geschicklichkeit verbunden werden müsste, nicht mehr erforderlich.

In einer bevorzugten Ausgestaltung ist vorgesehen, dass das erste Regalbediengerät in eine Beschickungsposition verfahrbar ist, die in der Richtung der ersten Ebene seitlich neben einer der Gewächshausanordnungen angeordnet ist. Das Regalbediengerät kann dann von der gleichen Seite aus beladen werden, die später zur Überführung eines Pflanzbehälters vom Regalbediengerät in eine der Kammern der Gewächshausanordnungen verwendet wird. Damit kann das Regalbediengerät wiederum einfach gehalten werden, ohne dass man an der Leistungsfähigkeit der Gewächshausanlage Abstriche machen müsste. Die Beschickungsposition kann beispielsweise einen Saatbereich enthalten, in dem Pflanzschalen, die später in einen Pflanzbehälter eingesetzt werden, oder die Pflanzbehälter direkt mit Erde oder einem anderen für die Aufzucht von Pflanzen geeigneten Substrat gefüllt werden. Weiterhin können Samen, Keimlinge oder Stecklinge oder dergleichen in die Erde oder das Substrat eingebracht werden. Schließlich kann man auch, falls erforderlich, Wasser oder eine Nährlösung bereits in den Pflanzenbehälter einbringen. Da die Beschickungsposition seitlich neben einer der Gewächshausanordnungen angeordnet ist, steht hier ein ausreichender Platz zur Verfügung.

Vorzugsweise ist zwischen der Beschickungsposition und der Gewächshausanordnung eine Keimposition angeordnet, in der mehrere Pflanzbehälteraufnahmen übereinander angeordnet sind. In der Keimposition können beispielsweise Samen unter kontrollierten Bedingungen keimen. Die kontrollierten Bedingungen können durchaus unterschiedlich zu den Bedingungen sein, die günstig für das Wachstum der Pflanzen ist. Wenn man die Keimung vom Wachstum trennt, lassen sich auf einfache Weise gute Ergebnisse erzielen.

Hierbei ist bevorzugt, dass die Keimposition eine geringere Aufnahmekapazität als eine einzelne Gewächshausanordnung aufweist. Hierbei geht man davon aus, dass die Zeit, die man zum Keimenlassen der Pflanzen oder der Samen benötigt, kürzer ist, als die Zeit, die zum Wachsen der Pflanzen bis zum erntereifen Zustand erforderlich ist.

Bevorzugterweise ist das zweite Regalbediengerät in eine Entladeposition verfahrbar, die in der Richtung der zweiten Ebene seitlich neben einer der Gewächshausanordnungen angeordnet ist. Hier gilt im Grunde das Gleiche wie für die Beschickungsposition. Auch zum Entladen steht dann ein ausreichender Raum zur Verfügung.

Vorzugsweise sind die Beschickungsposition und die Entladeposition in Richtung der ersten Ebene auf unterschiedlichen Seiten der ersten Gewächshausanordnung angeordnet. Vorgänge, die in der Beschickungsposition einerseits und in der Entladeposition andererseits ablaufen, kollidieren damit nicht. Dies vereinfacht das Beschicken und das Entladen der Pflanzenbehälter.

Vorzugsweise weist zumindest das erste Regalbediengerät eine Antriebssteuerung auf, die eine Beschleunigung einer Verfahrbewegung des Regalbediengeräts in Richtung der ersten Ebene auf einen Maximalwert begrenzt. Eine derartige Antriebssteuerung ist insbesondere dann von Vorteil, wenn die Pflanzbehälter in der Beschickungsposition bereits mit einer Flüssigkeit befüllt werden, so dass sich in dem Pflanzbehälter ein Flüssigkeitsbad ergibt. Wenn die Beschleunigung des Regalbediengeräts in positiver oder negativer Hinsicht, d.h. auch beim Bremsen, zu groß ist, dann besteht die Gefahr, dass die Flüssigkeit aus dem Pflanzbehälter herausschwappt. Dies hat zwei Nachteile. Zum einen ergibt sich eine Verschmutzung der Umgebung. Zum anderen steht dann möglicherweise nicht mehr die notwendige Menge der Flüssigkeit zur Verfügung, was insbesondere dann ungünstig ist, wenn die Flüssigkeit eine Nährlösung ist oder Nährstoffe beinhaltet. Durch die Begrenzung der Beschleunigung auf den Maximalwert kann dieses Problem vermieden werden. Eine Begrenzung der maximalen Geschwindigkeit ist hingegen nicht erforderlich.

Bevorzugterweise weist das Regalbediengerät zwei Masten auf, zwischen denen ein Hubwagen angeordnet ist. Die Gewächshausanordnungen können durchaus eine Breite von mehreren Metern aufweisen. Dementsprechend haben auch die Pflanzbehälter eine entsprechend große Breite. Die Verwendung von zwei Masten erlaubt es nun, den Hubwagen an seinen beiden Seiten zu stützen, so dass der Hubwagen eine horizontale Ausrichtung beibehalten kann, auch wenn der Pflanzbehälter eine gewisse Masse aufweist. Auch dies ist ein Merkmal, mit dem man das Risiko des Austretens einer Flüssigkeit aus den Pflanzbehältern kleinhalten kann.

Vorteilhafterweise weist das erste Regalbediengerät eine Schienenanordnung auf, deren Länge an die Anzahl der Gewächshausanordnungen angepasst ist. Die Gewächshausanlage kann dann frei skaliert werden. Wenn mehrere Gewächshausanordnungen erforderlich sind, dann kann die Schienenanordnung einfach verlängert werden oder man kann eine längere Schienenanordnung verwenden. Wenn weniger Gewächshausanordnungen verwendet werden, dann kann die Schienenanordnung entsprechend kürzer ausgebildet werden. Eine derartige Skalierung kann auch noch im Nachhinein erfolgen.

Vorzugweise wird jede Kammer an der Beschickungsseite durch eine bewegliche Wand begrenzt, die eine Öffnung aufweist, die aus einer ersten Position, in der die Kammer von außen nicht zugänglich ist, in mindestens in eine zweite Position bewegbar ist, in der eine der Aufnahmepositionen in der Kammer von außen zugänglich ist. Damit ist es möglich, in den jeweiligen Kammern eine vorbestimmte Atmosphäre aufrecht zu erhalten, ohne dass man einen übermäßig großen Aufwand treiben muss. Der Austausch beispielsweise von Luft mit der Umgebung wird durch die bewegliche Wand verhindert. Ein großer Vorteil liegt allerdings auch darin, dass die bewegliche Wand den Eintritt von Schädlingen, beispielsweise Insekten, Keimen oder Pilzen, verhindert oder zumindest das Risiko eines derartigen Eintritts kleinhält. Die Pflanzen, die in den jeweiligen Gewächshausanordnungen herangezogen werden, können dann ohne Schädlingsbekämpfungsmittel, beispielsweise Insektizide oder Pestizide, oder jedenfalls mit wenig Schädlingsbekämpfungsmitteln herangezogen werden. Dies steigert die Akzeptanz der betreffenden Pflanzen bei gesundheitsbewussten Verbrauchern. Die Öffnung ist vorzugsweise so ausgestaltet, dass jeweils nur eine Aufnahmeposition beschickt werden kann. Die anderen Aufnahmepositionen sind dann weiterhin von der Umwelt getrennt. Da beim Beschicken einer Aufnahmeposition die Öffnung zumindest teilweise durch einen Pflanzbehälter verschlossen ist, ist das Risiko eines Eintritts von unerwünschten Schädlingen in die Kammer relativ klein.

Die Erfindung wird im Folgenden anhand eines bevorzugten Ausführungsbeispiels in Verbindung mit der Zeichnung beschrieben. Hierin zeigen:

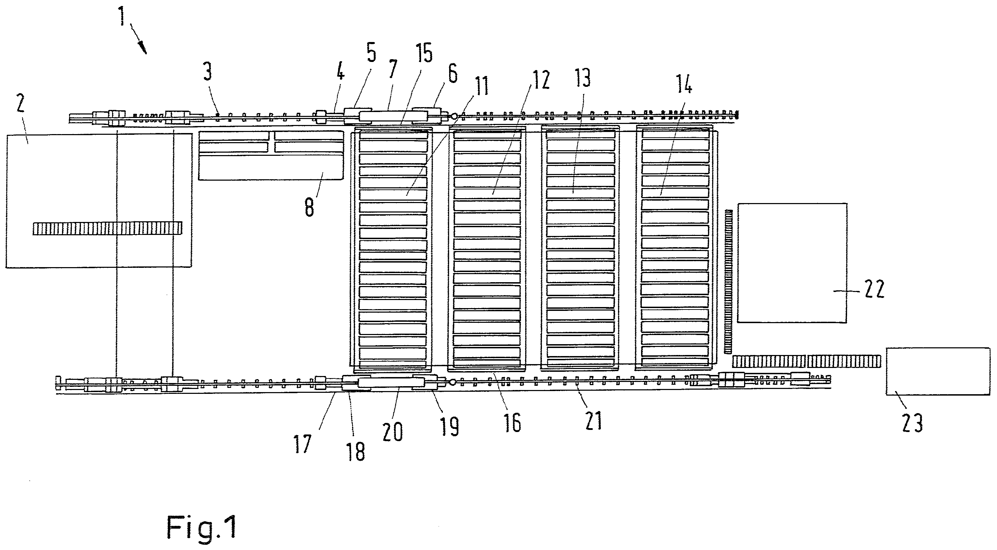

- Fig. 1: eine Draufsicht auf eine Gewächshausanordnung mit mehreren Gewächshäusern,
- Fig. 2: eine perspektivische Darstellung der Gewächshausanordnung nach Fig. 1,
- Fig. 3: ein schematische Schnittansicht einer Kammer in geschlossenem Zustand,
- Fig. 4: Ansicht nach Fig. 3 der Kammer mit einer Öffnung in einer Zugangsposition und
- Fig. 5: eine vergrößerte Darstellung der beweglichen Wand im Bereich ihrer Öffnung.

Eine Anlage 1 zum Erzeugen von Pflanzen weist einen Saatbereich 2 auf, in dem nicht näher dargestellte Pflanzschalen mit Erde oder einem anderen für die Aufzucht von Pflanzen geeigneten Substrat gefüllt werden können, wobei Samen, Keimlinge, Setzlinge oder dergleichen in die Erde oder das Substrat eingebracht werden können. Die Pflanzschalen werden dann in Pflanzbehälter eingesetzt, die ggfs. noch mit einer Nährlösung und/oder Wasser gefüllt werden.

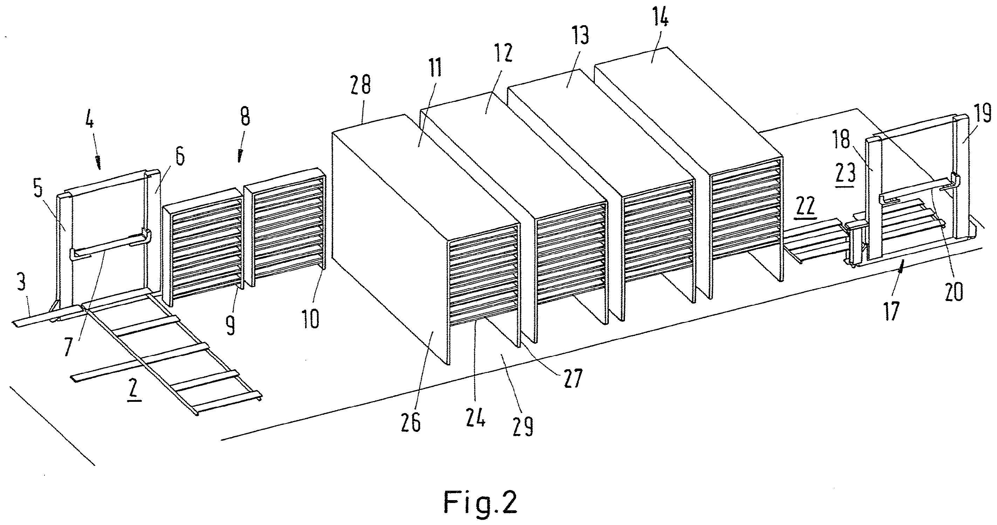

An einer Stirnseite des Saatbereichs 2 ist eine Schienenanordnung 3 angeordnet, auf der ein Regalbediengerät 4 verfahrbar ist. Das Regalbediengerät 4 weist zwei Masten 5, 6 auf, zwischen denen ein Hubwagen 7 angeordnet ist. Das Regalbediengerät 4 kann die Pflanzschalen aus dem Saatbereich 2 abholen und in einen Keimbereich 8 verbringen, in dem mehrere Keimschränke 9, 10 (Fig. 2) angeordnet sind. Die Keimschränke können durch das Regalbediengerät 4 beschickt werden.

Das Regalbediengerät 4 kann weiterhin vor eine von mehreren Gewächshausanordnungen 11, 12, 13, 14 verfahren werden. Jede dieser Gewächshausanordnungen weist eine Beschickungsseite 15 und eine Entnahmeseite 16 auf.

An der Entnahmeseite 16 ist ein zweites Regalbediengerät 17 mit zwei Masten 18, 19 angeordnet, zwischen denen ein Hubwagen 20 mit einem nicht näher dargestellten Lastaufnahmemittel angeordnet ist. Das Regalbediengerät 17 ist auf einer Schienenanordnung 21 vor den Entnahmeseiten 16 der Gewächshausanordnungen 11-14 verfahrbar in einen Erntebereich 22 und einen Waschbereich 23. Es ist darüber hinaus wieder zurück in den Saatbereich 2 verfahrbar.

Die Schienenanordnungen 3, 21 lassen sich beliebig verlängern, so dass die Länge der Schienenanordnungen 3, 21 an die Anzahl der Gewächshausanordnungen 11-14 angepasst werden kann. Die Anlage 1 ist damit auf einfache Weise skalierbar. Durch Hinzufügen oder Wegnehmen einer Gewächshausanordnung 11-14 lässt sich die Größe der Anlage 1 verändern.

Die Beschickungsseiten 15 aller Gewächshausanordnungen 11-14 sind in einer gemeinsamen ersten Ebene angeordnet und das erste Regalbediengerät 4 ist parallel zu dieser ersten Ebene verfahrbar. Die Entnahmeseiten 16 aller Gewächshausanordnungen 11-14 sind in einer zweiten Ebene angeordnet und das Regalbediengerät 17 ist parallel zu der zweiten Ebene verfahrbar.

Wie man beispielsweise in Fig. 2 erkennen kann, weist jede Gewächshausanordnung 11-14 mehrere übereinander angeordnete Aufnahmepositionen 24 für die oben beschriebenen Pflanzbehälter auf. Die Pflanzbehälter können in jeder der Aufnahmepositionen 24 an der Beschickungsseite 15 eingesetzt und an der Entnahmeseite 16 entnommen werden. Jede Aufnahmeposition 24 kann hierzu mit zwei Rollenleisten an ihren beiden Seiten versehen sein, so dass die Pflanzbehälter auf diesen Rollenleisten mit geringem Kraftaufwand verschoben werden können. Andere Möglichkeiten, um das Verschieben derartiger Pflanzbehälter zu erleichtern, sind denkbar.

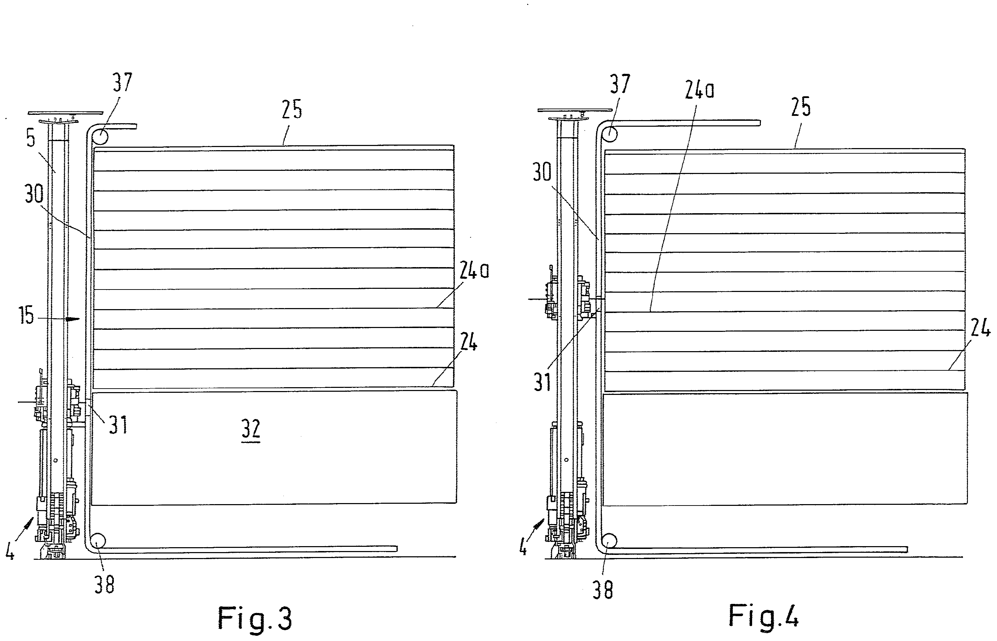

Die Aufnahmepositionen 24 sind in einer Kammer 25 (Fig. 3 und 4) angeordnet, die allseitig geschlossen ist. In Fig. 2 sind hierbei zwei Seitenwände 26, 27 und eine Deckenwand 28 erkennbar. Die untere Begrenzung wird durch einen Fußboden 29 gebildet. Es kann hier allerdings auch eine weitere eigene Wand vorgesehen sein.

Um den Einsatz von Schädlingsbekämpfungsmitteln, wie Insektiziden oder Pestiziden, zu vermeiden oder gering zu halten, sollten die Kammern 25 während des Wachstums der Pflanzen insgesamt geschlossen gehalten werden, um den Zutritt von Schädlingen zu verhindern.

Hierzu weist die Kammer (neben den bereits geschilderten vier Wänden 26-28) an der Beschickungsseite 15 eine erste bewegliche Wand 30 auf, die nachfolgend erläutert wird. An der Entnahmeseite 16 ist eine gleichartige Wand angeordnet, für die die nachfolgende Erläuterung in gleicher Weise gilt.

Die Wand 30 ist beweglich und weist eine Öffnung 31 auf, die aus einer ersten Position, in der die Kammer 25 von außen nicht zugänglich ist (Fig. 3) in eine zweite Position bewegt werden kann, in der eine Aufnahmeposition 24a in der Kammer von außen zugänglich ist (Fig. 4). In der Kammer 25 ist eine Hilfseinrichtung 32 angeordnet, beispielsweise eine Klimatisierungseinrichtung. Die Öffnung 31 kann in der ersten Position vor diese Hilfseinrichtung 32 verfahren werden, so dass die Hilfseinrichtung 32 die Öffnung 31 abdeckt und so einen Zutritt von außen durch die Öffnung 31 in die Kammer 25 hinein verhindert.

In der zweiten Position ist hingegen lediglich eine der Aufnahmepositionen 24a von außen zugänglich, wobei durch die Öffnung 31 ein Pflanzbehälter von außen in die Aufnahmeposition 24a eingebracht werden kann.

Für die Entnahmeseite 16 gilt das Gleiche. Auch hier ist die bewegliche Wand mit einer Öffnung versehen, die in eine erste Position verfahren werden kann, in der die Kammer an der Entnahmeseite 16 geschlossen ist, und in eine zweite Position, an der eine der Aufnahmepositionen 24, 24a zugänglich ist. Wenn die Öffnung in der zweiten Position steht, dann kann ein Pflanzbehälter aus der Kammer 25 entnommen werden.

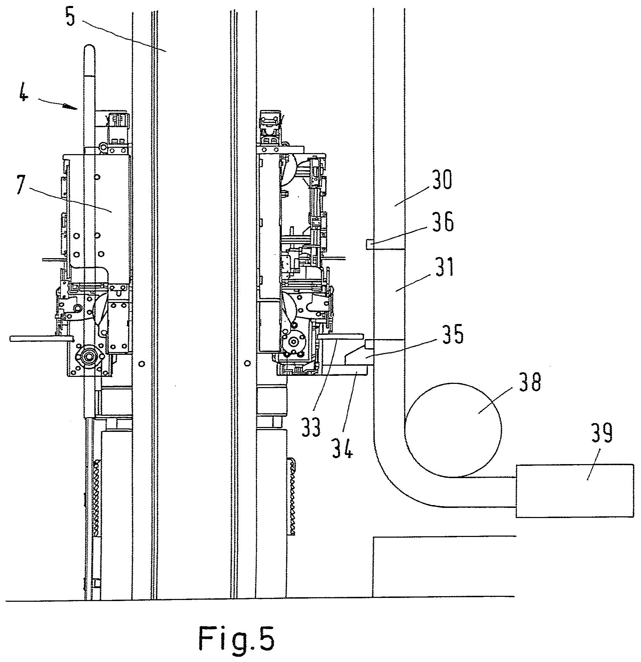

Fig. 5 zeigt einen vergrößerten Teil der Wand 30 und des Regalbediengeräts 4, so dass weitere Einzelheiten erkennbar sind. In Fig. 5 ist eine Ausführungsform dargestellt, die geringfügig von der in den Fig. 3 und 4 abweicht.

Der Hubwagen 7 des Regalbediengeräts 4 ist an den Masten 5, 6 vertikal verfahrbar. Der Hubwagen weist ein Lastaufnahmemittel 33 auf, das horizontal verfahren werden kann. Das Lastaufnahmemittel 33 ist in eine Richtung bewegbar, die senkrecht zu den Masten 5, 6 und senkrecht zur Schienenanordnung 3 gerichtet ist.

Mit dem Lastaufnahmemittel verbunden ist ein Kupplungselement 34, das mit einem Gegenelement 35 an der Wand 30 in Eingriff gebracht werden kann, wenn das Lastaufnahmemittel 33 in Richtung auf die Wand 30 verfahren wird. Das Kupplungselement 34 und das Gegenelement 35 bilden eine Kupplungsanordnung. Die Bewegung des Kupplungselements 34 in Richtung auf die Wand 30 kann begrenzt sein, während das Lastaufnahmemittel 33 weiterbewegt werden kann, um durch die Öffnung 31 in die Kammer 25 einzudringen. Ein auf dem Lastaufnahmemittel 33 vorgesehener Pflanzbehälter kann dann in einer Aufnahmeposition 24, 24a abgesetzt werden. Das Kupplungselement 34 kann auch auf andere Weise am Hubwagen 7 angeordnet sein.

Die Kupplungsanordnung 34, 35 kann die Bewegung des Hubwagens 7 unmittelbar auf die Wand 30 übertragen, so dass die Öffnung 31 sich synchron mit dem Hubwagen 7 bewegt. Die Kupplungsanordnung 34, 35 ist lösbar. Im eingerückten Zustand, also wenn das Kupplungselement 34 mit dem Gegenelement 35 verbunden ist, kann die Kupplungsanordnung allerdings Kräfte in beide Bewegungsrichtungen übertragen, so dass die Wand 30 mit der Öffnung 31 sowohl nach oben als auch nach unten bewegt werden kann.

Die Öffnung 31 weist einen verstärkten Rand 36 auf. Der verstärkte Rand 36 sorgt dafür, dass die Kontur der Öffnung 31 auch bei einer dünnen Wand 30 erhalten bleibt.

Die Wand 30 ist, wie man in Fig. 3 und 4 erkennen kann, über zwei Umlenkrollen 37, 38 geführt. Da die Wand 30 verformbar ist, kann sie an den Umlenkrollen 37, 38 umgelenkt werden und die Bereiche, die nicht zum Abdecken der Beschickungsseite 15 bzw. der Entnahmeseite 16 verwendet werden, können dann in Bereichen außerhalb der Kammer untergebracht werden.

Fig. 5 zeigt eine abgewandelte Ausgestaltung. Hier wird die Wand 30 ebenfalls über die Umlenkrolle 38 geführt und gelangt dann in eine Aufnahmeeinrichtung 39, in der sie beispielsweise aufgewickelt oder zusammengefaltet werden kann. Eine entsprechende Aufnahmeeinrichtung 39 kann auch an dem Ende der beweglichen Wand 30 vorgesehen sein, die in Fig. 5 nicht dargestellt ist.

Die Wand 30 kann beispielsweise als Rolltor oder als Falttor mit beweglich miteinander verbundenen Lamellen ausgebildet sein. Die Wand 30 kann auch durch eine dicke Plane gebildet sein, die aufgewickelt werden kann.

Wie oben erwähnt, sind die Beschickungsseiten 15 in einer ersten Ebene angeordnet und die Entnahmeseiten 16 sind in einer zweiten Ebene angeordnet. Parallel zu beiden Ebenen ist jeweils ein Regalbediengerät verfahrbar, so dass die Gewächshausanordnungen 11-14 im Durchlaufverfahren mit den Pflanzbehältern beschickt werden können, wobei das Regalbediengerät 4 für die Beschickung zuständig ist und das Regalbediengerät 17 für die Entnahme der Pflanzbehälter aus den Gewächshausanordnungen 11-14.

Regalbediengeräte 4, 17 haben den Vorteil, dass sie die Pflanzbehälter in drei Raumrichtungen verlagern können. Die erste Raumrichtung wird durch die Schienenanordnung 3 (bzw. eine ähnliche Schienenanordnung 21 für das Regalbediengerät 17) definiert. Die zweite Raumrichtung wird durch die Masten 5, 6 definiert. Die dritte Raumrichtung wird durch die Bewegungsrichtung der Lastaufnahmemittel 7 definiert.

Es ist auch möglich, nur an einer Stirnseite der Gewächshausanordnungen 11-14 ein Regalbediengerät 4 vorzusehen, das dann sowohl für die Beschickung als auch für die Entnahme der Pflanzbehälter zuständig ist.

Die Keimschränke 9, 10 können ähnlich ausgebildet sein wie die Gewächshausanordnungen 11-14. Da die Keimzeit in der Regel kürzer ist als die Wachstumszeit der Pflanzen, können die Keimschränke 9, 10 kleiner als die Gewächshausanordnungen 11-14 sein, beispielsweise niedriger und kürzer. Dementsprechend weist die Keimposition 8 eine geringere Aufnahmekapazität als die Gewächshausanordnungen 11-14 auf.

Es ist zweckmäßig, wenn die Vorbereitungsposition, also der Saatbereich 2, und die Entladeposition, also der Erntebereich 22 und ggfs. der Waschbereich 23, auf unterschiedlichen Seiten der Gewächshausanordnungen 11-14 angeordnet sind. Die einzelnen Funktionsbereiche können damit räumlich entkoppelt werden.

Zumindest das Regalbediengerät 4 an der Beschickungsseite weist eine Antriebssteuerung auf, die eine Beschleunigung einer Verfahrbewegung des Regalbediengeräts 4 auf der Schienenanordnung 3 begrenzt. Ein Regalbediengerät hat üblicherweise eine sehr hohe Beschleunigung, um Förderzeiten, wie sie beispielsweise in einem Hochregallager auftreten, kleinzuhalten. Hierzu ist eine hohe Beschleunigung notwendig. Im vorliegenden Fall könnte eine zu große Beschleunigung allerdings dazu führen, dass eine Flüssigkeit, die in einen Pflanzbehälter eingefüllt worden ist, austritt und damit die Umgebung verschmutzt. Um einen derartigen Schadensfall zu vermeiden, ist die Beschleunigung auf den Maximalwert begrenzt. Der Maximalwert ist so gewählt, dass auch bei einer Beschleunigung mit dem Maximalwert die Flüssigkeit nicht aus dem Pflanzbehälter austreten kann.

Die Verwendung von zwei Masten am Hubwagen 5, 6 hat den Vorteil, dass Pflanzbehälter, die durch das Lastaufnahmemittel 33 am Hubwagen 7 aufgenommen worden sind, mit ausreichender Genauigkeit horizontal gehalten werden können, so dass wiederum das Risiko eines Überlaufens von Flüssigkeit aus dem Pflanzbehälter kleingehalten werden kann.

Die Gewächshausanordnungen 11-14 müssen nicht alle gleich ausgebildet sein. Wenn nur ein Regalbediengerät 4 verwendet wird, reicht es aus, die Beschickungsseiten 15 in einer Ebene anzuordnen. Wenn zwei Regalbediengeräte 4, 17 verwendet werden, ist Voraussetzung, dass sowohl die Beschickungsseiten 15 als auch die Entnahmeseiten 16 jeweils in einer Ebene angeordnet sind. Im Übrigen können die Gewächshausanordnungen 11-14 durchaus unterschiedliche Höhen aufweisen. Auch können die Abstände zwischen Aufnahmepositionen 24, 24a unterschiedlich sein, um beispielsweise unterschiedlich hohe Pflanzen in unterschiedlichen Gewächshausanordnungen 11-14 heranziehen zu können.

Da die Kammer 25 beim Beschicken und Entladen weitgehend geschlossen bleibt, weil nur über die Öffnung eine Verbindung zur Umgebung möglich ist, kann auch die Atmosphäre in der Kammer 25, insbesondere Temperatur und Feuchtigkeit, gut kontrolliert und gesteuert werden.

Falls erforderlich, kann die Öffnung 31 auch noch in eine Position zwischen zwei Aufnahmepositionen verfahren werden, beispielsweise, um Reperaturarbeiten in der Kammer 25 und einen dabei erforderlichen Austausch von Ersatzteilen vornehmen zu können. Ersatzteile können beispielsweise Träger von Beleuchtungseinrichtungen sein. Dies gilt unabhängig davon, ob ein oder zwei Regalbediengeräte vorgesehen sind.

## Patentansprüche

1. Gewächshausanlage (1) mit mindestens einer ersten Gewächshausanordnung (11) und einer zweiten Gewächshausanordnung (12), wobei die erste Gewächshausanordnung (11) eine erste Kammer (25) aufweist, in der mehrere Aufnahmepositionen (24, 24a) für Pflanzbehälter übereinander angeordnet sind und die eine erste Beschickungsseite (15) aufweist, und die zweite Gewächshausanordnung (12) eine zweite Kammer aufweist, in der mehrere Aufnahmepositionen für Pflanzbehälter übereinander angeordnet sind und die eine zweite Beschickungsseite aufweist, wobei die erste Beschickungsseite (15) und die zweite Beschickungsseite in einer gemeinsamen ersten Ebene angeordnet sind und ein erstes Regalbediengerät (4) vor den Beschickungsseiten (15) angeordnet ist, **dadurch gekennzeichnet, dass** die erste Kammer (25) eine erste Entnahmeseite (16) aufweist, die gegenüber der ersten Beschickungsseite (15) angeordnet ist, und die zweite Kammer eine zweite Entnahmeseite aufweist, die gegenüber der zweiten Beschickungsseite angeordnet ist, wobei die erste Entnahmeseite (16) und die zweite Entnahmeseite in einer gemeinsamen zweiten Ebene angeordnet sind und ein zweites Regalbediengerät (17) vor den Entnahmeseiten angeordnet ist..

2. Gewächshausanlage nach Anspruch 1, **dadurch gekennzeichnet, dass** das erste Regalbediengerät (4) in eine Beschickungsposition (2) verfahrbar ist, die in der Richtung der ersten Ebene seitlich neben einer der Gewächshausanordnungen (11, 12) angeordnet ist.

3. Gewächshausanlage nach Anspruch 2, **dadurch gekennzeichnet, dass** zwischen der Beschickungsposition (2) und der ersten Gewächshausanordnung (11) eine Keimposition (8) angeordnet ist, in der mehrere Pflanzbehälteraufahmen übereinander angeordnet sind.

4. Gewächshausanlage nach Anspruch 3, **dadurch gekennzeichnet, dass** die Keimposition (8) eine geringere Aufnahmekapazität als eine einzelne Gewächshausanordnung (11, 12) aufweist.

5. Gewächshausanlage nach einem der Ansprüche 2 bis 4, **dadurch gekennzeichnet, dass** das zweite Regalbediengerät (17) in eine Entladeposition (22, 23) verfahrbar ist, die in der Richtung der zweiten Ebene seitlich neben einer der Gewächshausanordnungen (11, 12) angeordnet ist.

6. Gewächshausanlage nach Anspruch 5, **dadurch gekennzeichnet, dass** die Beschickungsposition (2) und die Entladeposition (22, 23) in Richtung der ersten Ebene auf unterschiedlichen Seiten der ersten Gewächshausanordnung (11) angeordnet sind.

7. Gewächshausanlage nach einem der Ansprüche 1 bis 6, **dadurch gekennzeichnet, dass** zumindest das erste Regalbediengerät (4) eine Antriebssteuerung aufweist, die eine Beschleunigung einer Verfahrbewegung des Regalbediengeräts (4) in Richtung der ersten Ebene auf einen Maximalwert begrenzt.

8. Gewächshausanlage nach einem der Ansprüche 1 bis 7, **dadurch gekennzeichnet, dass** das Regalbediengerät (4) zwei Masten (5, 6) aufweist, zwischen denen ein Hubwagen (7) angeordnet ist.

9. Gewächshausanlage nach einem der Ansprüche 1 bis 8, **dadurch gekennzeichnet, dass** das erste Regalbediengerät (4) eine Schienenanordnung (3) aufweist, deren Länge an die Anzahl der Gewächshausanordnungen (11, 12) angepasst ist.

10. Gewächshausanlage nach einem der Ansprüche 1 bis 9, **dadurch gekennzeichnet, dass** jede Kammer (25) an der Beschickungsseite (15) durch eine bewegliche Wand (30) begrenzt ist, die eine Öffnung (31) aufweist, die aus einer ersten Position, in der die Kammer (25) von außen nicht zugänglich ist, in mindestens eine zweite Position bewegbar ist, in der eine der Aufnahmepositionen (24, 24a) in der Kammer (25) von außen zugänglich ist.

## Claims

1. Greenhouse system (1) with at least one first greenhouse arrangement (11) and a second greenhouse arrangement (12), wherein the first greenhouse arrangement (11) has a first chamber (25) in which a plurality of receiving positions (24, 24a) for plant containers are arranged one above the other and which has a first loading side (15), and the second greenhouse arrangement (12) has a second chamber in which a plurality of receiving positions for plant containers are arranged one above the other and which has a second loading side, wherein the first loading side (15) and the second loading side are arranged in a common first plane and a first rack serving device (4) is arranged in front of the loading sides (15), **characterized in that** the first chamber (25) has a first removal side (16) which is arranged opposite the first loading side (15), and the second chamber has a second removal side which is arranged opposite the second loading side, wherein the first removal side (16) and the second removal side are arranged in a common second plane and a second rack-serving device (17) is arranged in front of the removal sides.

2. . Greenhouse system according to claim 1, **characterized in that** the first rack serving device (4) can be moved to a feeding position (2) which is arranged in the direction of the first plane laterally adjacent to one of the greenhouse arrangements (11, 12).

3. . Greenhouse system according to claim 2, **characterized in that** a germination position (8) is arranged between the feeding position (2) and the first greenhouse arrangement (11), in which several plant container racks are arranged one above the other.

4. . Greenhouse system according to claim 3, **characterized in that** the germination position (8) has a lower capacity than a single greenhouse arrangement (11, 12).

5. . Greenhouse system according to one of claims 2 to 4, **characterized in that** the second rack serving device (17) can be moved into an unloading position (22, 23) which is arranged in the direction of the second plane laterally adjacent to one of the greenhouse arrangements (11, 12).

6. . Greenhouse system according to claim 5, **characterized in that** the loading position (2) and the unloading position (22, 23) are arranged on different sides of the first greenhouse arrangement (11) in the direction of the first plane.

7. . Greenhouse system according to one of claims 1 to 6, **characterized in that** at least the first rack serving device (4) has a drive control which limits the acceleration of a traversing movement of the rack serving device (4) in the direction of the first plane to a maximum value.

8. . Greenhouse system according to one of claims 1 to 7, **characterized in that** the rack serving device (4) has two masts (5, 6) between which a lift truck (7) is arranged.

9. . Greenhouse system according to one of claims 1 to 8, **characterized in that** the first rack serving device (4) has a rail arrangement (3) whose length is adapted to the number of greenhouse arrangements (11, 12).

10. . Greenhouse system according to one of claims 1 to 9, **characterized in that** each chamber (25) is bounded on the loading side (15) by a movable wall (30) which has an opening (31) which is movable from a first position, in which the chamber (25) is not accessible from the outside, into at least a second position, in which one of the receiving positions (24, 24a) in the chamber (25) is accessible from the outside.

## Revendications

1. Ensemble serre (1) avec au moins un premier agencement de serre (11) et un deuxième agencement de serre (12), sachant que le premier agencement de serre (11) comporte une première chambre (25) dans laquelle sont disposés les uns sur les autres plusieurs positions de logement (24, 24a) pour conteneurs de plantes et qui comporte un premier côté de chargement (15) et le deuxième agencement de serre (12) comporte une deuxième chambre dans laquelle sont disposés les unes sur les autres plusieurs positions de logement pour conteneurs de plantes et qui comporte un deuxième côté de chargement, sachant que le premier côté de chargement (15) et le deuxième côté de chargement sont disposés dans un premier plan commun et un premier gerbeur-transtockeur (4) est disposé devant les côtés de chargement (15), ***caractérisé en ce que*** la première chambre (25) comporte un premier côté de prélèvement (16), qui est disposé en face du premier côté de chargement (15) et la deuxième chambre comporte un deuxième côté de prélèvement, qui est disposé en face du deuxième côté de chargement, sachant que le premier côté de prélèvement (16) et le deuxième côté de prélèvement sont disposés dans une deuxième plan commun et un deuxième gerbeur-transtockeur (17) est disposé devant les côtés de prélèvement.

2. Ensemble serre selon la revendication 1, ***caractérisé en ce qu***'un premier gerbeur-transtockeur (4) peut être déplacé dans une position de chargement (2), qui est disposée latéralement dans la direction du premier plan à côté d'un des agencements de serre (11, 12).

3. Ensemble serre selon la revendication 2, ***caractérisé en ce qu'***entre la position de chargement (2) et le premier agencement de serre (11) est disposée une position de germination (8) dans laquelle sont disposés plusieurs logements de conteneurs de plantes les uns sur les autres.

4. Ensemble serre selon la revendication 3, ***caractérisé en ce que*** la position de germination (8) comporte une capacité de logement plus faible qu'un agencement de serre individuel (11, 12).

5. Ensemble serre selon l'une quelconque des revendications 2 à 4, ***caractérisé en ce que*** le deuxième gerbeur-transtockeur (17) peut être déplacé dans une position de déchargement (22, 23), qui est disposée latéralement dans la direction du deuxième plan à côté d'un des agencements de serre (11, 12).

6. Ensemble serre selon la revendication 5, ***caractérisé en ce que*** la position de chargement (2) et la position de déchargement (22, 23) sont disposées en direction du premier plan sur des côtés différents du premier agencement de serre (11).

7. Ensemble serre selon l'une quelconque des revendications 1 à 6, ***caractérisé en ce qu***'au moins le premier gerbeur-transtockeur (4) comporte une commande d'entraînement, qui limite à une valeur maximale une accélération d'un mouvement de déplacement du gerbeur-transtockeur (4) en direction du premier plan.

8. Ensemble serre selon l'une quelconque des revendications 1 à 7, ***caractérisé en ce que*** le gerbeur-transtockeur (4) comporte deux mâts (5, 6) entre lesquels est disposé un chariot élévateur (7).

9. Ensemble serre selon l'une quelconque des revendications 1 à 8, ***caractérisé en ce que*** le premier gerbeur-transtockeur (4) comporte un système à rails (3) dont la longueur est adaptée au nombre des agencements de serre (11, 12).

10. Ensemble serre selon l'une quelconque des revendications 1 à 9, ***caractérisé en ce que*** chaque chambre (25) sur le côté de chargement (15) est limitée par une paroi mobile (30), qui comporte une ouverture (31), qui à partir d'une première position dans laquelle la chambre (25) n'est pas accessible de l'extérieur, peut être déplacée dans au moins une deuxième position dans laquelle une des positions de logement (24, 24a) dans la chambre (25) est accessible de l'extérieur.
